## Europäisches Patentamt

## European Patent Office

## Office européen des brevets

(19)

(11) Veröffentlichungsnummer: **0 057 737**

**A2**

(12)     EUROPÄISCHE PATENTANMELDUNG

(21) Anmeldenummer: 81100856.4

(22) Anmeldetag: 06.02.81

(51) Int. Cl.³: **G 01 N 23/04**
**G 01 N 23/18**

(43) Veröffentlichungstag der Anmeldung:
18.08.82  Patentblatt  82/33

(84) Benannte Vertragsstaaten:
**DE FR GB SE**

(71) Anmelder: **Przedsiebiorstwo Projektowania i**
**Wyposazania Obiektow Przemyslowych "PROZEMAK"**
**Oddzial Projektowy w Gliwicach**
**ul. Szobiszowicka 1/3**
**Gliwice 44-100(PL)**

(72) Erfinder: **Bazarow, Leonid**
**ul.Lompy 5/2**
**Pyskowice(PL)**

(72) Erfinder: **Gwizdz, Wlodzimierz**
**ul.Derkacza 6/46**
**Gliwice(PL)**

(72) Erfinder: **Mendrek, Marian**
**ul-Dabrowskiego 41/6**
**Gliwice(PL)**

(72) Erfinder: **Matuszny, Franciszek**
**ul.15-Grudnia 23/6**
**Gliwice(PL)**

(72) Erfinder: **Nowinski, Marian**
**ul.Waliszewskiego 15/12**
**Gliwice(PL)**

(72) Erfinder: **Rzodeczko, Marceli**

**Verstorben(PL)**

(74) Vertreter: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) Gerät zur radiographischen Fehlerprüfung nach einem kontinuierlichen oder zyklischen Verfahren.

(57) Dieses Gerät zur Prüfung von Schweißnähten und Werkstoffen beim Einsatz einer Energie mit großen Expositionsdosen weist zwecks Mechanisierung der Exposition und Gewinnung von Prüfungsergebnissen hoher Qualität aus im Dauerbetrieb durchgeführten Prüfungen ein längs einer auf Kugelstützen (9) abgestützten Führung (8) durchfahrbares Werk (10) auf. Das Werk (10) ist mit einem Ausleger (15) zum Einbau, verschiebbar in der Richtung des zu prüfenden Gegenstandes (4), eines Einlegeapparates (11) für einzelne Filme oder eines Aufgabeapparates (12) für Bandfilme versehen. Die Apparate (11 und 12) ermöglichen die Ausführung der Aufnahmen in Längs- und Umfangsrichtung nach dem zyklischen oder kontinuierlichen Verfahren. Der zu prüfende Gegenstand (4) wird in bekannter Weise zwischen dem Film und dem die Expositionsstrahlen emittierenden radiographischen Fehlerprüfgerät (1) untergebracht, wobei zwischen dem zu prüfenden Gegenstand (4) und dem Fehlerprüfgerät (1) ein Bündelformgeber (19) angeordnet ist, der ein enges kollimiertes Expositionsstrahlenbündel mit bestimmtem Format formt.

Der zu prüfende Gegenstand, z.B. eine Trommel, wird auf angetriebenen Rollen (3) aufgestellt und das radiographische Fehlerprüfgerät (1) ist an einer Handhabungseinrichtung (2) untergehängt. Die Wirkung des Werkes (10) des Apparates (11 oder 12), der Handhabungseinrichtung (2) und des Rollenantriebes im Expositionsprozess des Fehlerprüfgerätes (1) erfolgt selbsttätig synchronisiert mittels einer Versorgungs- und Steuerstation (13 und 14).

Das erfindungsgemäße Gerät findet Anwendung in industriellen Betrieben, die Anlagen für Kernenergetik, Apparate für die chemische Industrie und andere Konstruktionen und Anlagen mit hohen Güteanforderungen herstellen.

./...

FIG.1

FIG.2

## Gerät zur radiographischen Fehlerprüfung nach einem kontinuierlichen oder zyklischen Verfahren

Die Erfindung betrifft ein Gerät zur radiographischen Fehlerprüfung nach einem kontinuierlichen oder zyklischen Verfahren zur Prüfung von Schweißnähten, Werkstoffen, Bauteilen, Abgüssen, beim Einsatz insbesondere der Apparate des Types des Linearbeschleunigers oder Betatrons und Isotopenquellen.

Ein solches Gerät findet Anwendung in industriellen Betrieben, welche Anlagen für die Kernenergetik, Apparate für die chemische Industrie und andere Konstruktionen und Anlagen mit hohen Qualitätsanforderungen herstellen.

Bisher sind Apparate und Einrichtungen zur Ausführung von Aufnahmen zwecks der Qualitätsprüfung von Schweißnähten oder bei ärztlichen Untersuchungen mit Röntgenstrahlen bekannt, wie es in dem polnischen Patent 110 461 und den deutschen Patenten 2 321 772 und 2 706 346 dargestellt ist. Das in der ärztlichen Praxis anzuwendende polnische Patent 110461 stellt die Konstruktion einer Auffangkamera für schnelle photographische Aufnahmen auf Filmen mit Abmessungen 100 x 100 oder 70 x 70 dar, welche Kamera einen Speicher für nichtbelichtete und einen Speicher für belichtete Filme mit einem Federaufgeber zur Einstellung einer Kassette mit einem einzelnen Film in der Ebene der Brennweite des Objektivs des optischen Systemes aufweist. Diese Kamera dient zur Ausführung einzelner photographischer Aufnahmen oder deren Serien, worin ein Optik-System bekannter Konstruktion die Röntgen-Aufnahmen umwandelt.

Das deutsche Patent 2 321 772 stellt ein Gerät zur Ausführung von Aufnahmen auf Filmen dar, das bei Prüfungen von Schweißnähten durch Durchleuchten mit Röntgen-Strahlen angewandt wird. In diesem Gerät ist der Emitter der Röntgen-Strahlen auf den Wagen an einer Seite des zu prüfenden Gegenstandes gestellt und der radiographische Film ist im Apparat untergebracht, der sich an der anderen Seite der zu prüfenden Schweißnaht befindet, d.h. im Falle eines Rohres, in dessen Innenraum.

Der Emitter-Wagen und der Apparat sind mittels starrer Zugbänder mit einer zusätzlichen durchfahrbaren Einrichtung derart verbunden, daß bei den Durchfahrten dieser Einrichtungen Längsaufnahmen ausgeführt werden.

Der verschiebbar gegenüber dem Rohr angeordnete Apparat ist mit einem Werk zur Aufgabe der unbelichteten und Entnahme der belichteten radiographischen Filme versehen, und der Emitter ist mit einem glockenförmigen Bleischutz versehen. Außerdem ist der Emitter-Wagen mit einem umwikkelbaren Band zur Bezeichnung der Aufnahme-Nummern versehen.

Im Gegensatz zu dem deutschen Patent 2 321 772 stellt das deutsche Patent 2 706 346 eine unterschiedliche Konstruktion des Gerätes zum Ausführen von Röntgen-Aufnahmen von Schweißnähten dar, was im Aufgeben der radiographischen Filme in die Belichtungsstelle mittels eines Transporters besteht, welcher einen Band in Form einer konkaven Glocke hat und mit einem Werk zum Aufheben und Absenken des Transporters versehen ist. Die die unbelichteten und belichteten Filme aufgebenden und entnehmenden Apparate sind ausserhalb des zu prüfenden Gegenstandes untergebracht.

Die Ausführung von Aufnahmen zwecks Prüfung der Schweißnaht- oder Werkstoffgüte, insbesondere wenn diese dick im Querschnitt sind, erfordert beim Einsatz radiographischer Methoden den Einsatz von Apparaten mit hoher Strahlungsenergie und großer Expositionsdosis. Derartige Apparate, wie z.B. der Linearbeschleuniger oder das Betatron erfordern zusätzlich die Ausrüstung mit einer Einrichtung zur Handhabung, z.B. eines Spezialkranes, der zur Erreichung entsprechender Expositionsgeommetrie dient.

Aus diesen Gründen sowie aus den Gründen der Vielfältigkeit des zu prüfenden Gegenstandes sowie starker Beleuchtung in dem Untersuchungsraum, sind die technischen Lösungen der deutschen Patente 2 321 772 und 2 706 346 sowie des polnischen Patents 270346 nicht einwandfrei. Deshalb werden bei der Prüfung von Schweißnähten, von Werkstoffen der Bauteile und Abgüssen, insbesondere mit Hilfe von Linearbeschleunigern oder Betatrons, einzelne Filme angewandt, die von Hand in die Beleuchtungsstelle gebracht werden, durch Ankleben oder Klammern.

Der Erfindung liegt die Aufgabe zugrunde, ein Gerät zum selbsttätigen Einlegen der einzelnen radiographischen Filme und zur Ermöglichung der Anwendung und der Aufgabe der Bandfilme in die Beleuchtungsstelle zu schaffen, welches Gerät es erlaubt, das Arbeitsverfahren der Exposition zu mechanisieren und Prüfergebnisse hoher Qualität aus den im Dauerbetrieb ausgeführten Prüfungen zu gewinnen.

Diese Aufgabe wird mit einem Gerät zur radiographischen Fehlerprüfung nach einem kontinuierlichen oder zyklischen Verfahren zur Prüfung von Schweißnähten, Werkstoffen, Bauteilen und Abgüssen nach radiographischen Methoden, und insbesondere mittels Apparaten mit großen Expositionsdosen und Strahlungsenergie erfindungsgemäß dadurch gelöst, daß auf einer aus auf Kugelstützen abgestützten lösbaren Elementen verschiedener Länge zusammengesetzten Führung ein mit einem in senkrechter Richtung einstellbarer Ausleger, zum Einbau in Richtung des zu prüfenden Gegenstandes verschiebbar, eines Einlegeapparates für einzelne Filme oder eines Aufgabeapparates zur zyklischen oder kontinuierlichen Belichtung versehenes durchfahrbares Werk aufgebaut ist, wobei kontinuierliche Belichtung durch einen Bündelformgeber realisiert wird, und die Wirkung der Antriebe des Gerätes während der Exposition mittels einer Versorgungs- und Steuerstation mit dem radiographischen Fehlerprüfgerät, einer Handhabungseinrichtung, dem zu prüfenden Gegenstand und diesen Gegenstand antreibenden Rollen synchronisiert ist.

Das Wesen der Erfindung besteht darin, daß an eine lösbare Führung mit Kugelstützen ein durchfahrbares Werk angebaut ist, das mit einem Ausleger zum Einbau eines Einlegeapparates der einzelnen Filme oder des Aufgabeapparates des Bandfilmes versehen ist, wobei das selbsttätige und zyklische Einlegen der einzelnen Filme oder das Aufgeben des Bandfilmes mit bestimmter Länge mit einem radiographischen Fehlerprüfgerät, einer Handhabeeinrichtung, dem zu prüfenden Gegenstand und den den zu prüfenden Gegenstand antreibenden Rollen mittels einer Versorgungs- und Steuerstation synchronisiert ist. Weiter ist an den Ausleger verschiebbar eine Säule angebaut, die mit einem angetriebenen Drehhebel versehen ist, der den Einlegeapparat für einzelne Filme oder den Aufgabeapparat für Bandfilme befestigt. Außerdem besitzt das zusätzliche Gerät einen Bündelformgeber, der ein enges Bündel von Expositionsstrahlen mit einem bestimmten Format gestaltet und zwischen dem zu prüfenden Gegenstand und dem Fehlerprüfgerät angeordnet ist, wobei der Bündelformgeber sich gegenüber der Stahlungsachse um $90^{o}$ drehen kann. Das Gerät kann zusätzlich ein Kassettenwerk besitzen, welches zyklisch die Rahmen mit Bezeichnungen der ausgeführten Aufnahmen aufgibt. Dieses Werk kann sich ebenfalls gegenüber der Stahlungsachse um $90^{o}$ drehen.

Der Einlegeapparat für einzelne Filme zur Ermöglichung der Exposition in Längsrichtung und in Umfangsrichtung besitzt ein eingebautes Kippwerk und einen Rahmen mit einer Kurbelachse, an welches ein Spannzeug und das Aufgabewerk mit Gelenkrahmen angebaut sind, welcher Rahmen die Gegenhalter und Spannwerke der Filme beinhaltet. Das grundsätzliche Merkmal des Aufgabeapparates für Bandfilme besteht in der Konstruktion des Schutzgehäuses, in welches die nichtantreibenden und antreibenden Trommeln, Führungs- und Andrückrollen sowie das Kontroll- und Steuerwerk eingebaut sind, welches selbsttätige zyklische oder kontinuierliche Expositionen des Bandfilmes ermöglicht. Das Schutzgehäuse besitzt außerdem einen zwischen dem Band und dem zu prüfenden Gegenstand angebrachten Filtrierfilm. Außerdem besitzen die Segmente der Gehäuse hinter dem zu überlichtenden Bandteil Schutzmasken gegen die Sekundärexposition sowie eine hintere Öffnung zum Einlegen und Abnehmen der Trommel mit dem Band.

Die Trommeln sind mit Überlastungskupplungen mit Stirnverzahnung versehen, die an die drehbare Grundfläche angedrückt werden und an den Antrieb mittels eines Andrückwerkes an die Körper, in welchen die elektromagnetischen Bremsen eingebaut sind.

Ein Vorteil der erfindungsgemäßen Konstruktion des Gerätes zum Einlegen der einzelnen Filme und Aufgeben des Bandfilmes besteht in universalen Einsatzmöglichkeiten, weil das Gerät an verschiedene Filmarten angepaßt ist und die Durchführung der radiographischen Prüfungen der Gegenstände mit beliebiger Konfiguration und Gestaltung ermöglicht. Außerdem verkürzt das selbsttätige Einlegen und Aufgeben der Filme die Zeit zur Ausführung der Aufnahmen bei deren hoher Qualität und verbessert beträchtlich die Arbeitsbedingungen der Mannschaft, dank der Ermögli-

chung der Fernbedienung von radiographischen Prüfungen. Das erfindungsgemäße Gerät ermöglicht auch den Einsatz von Röntgenapparaten.

Der Erfindungsgegenstand ist im folgenden anhand der Zeichnungen näher erläutert, worin die einzelnen Figuren zeigen:

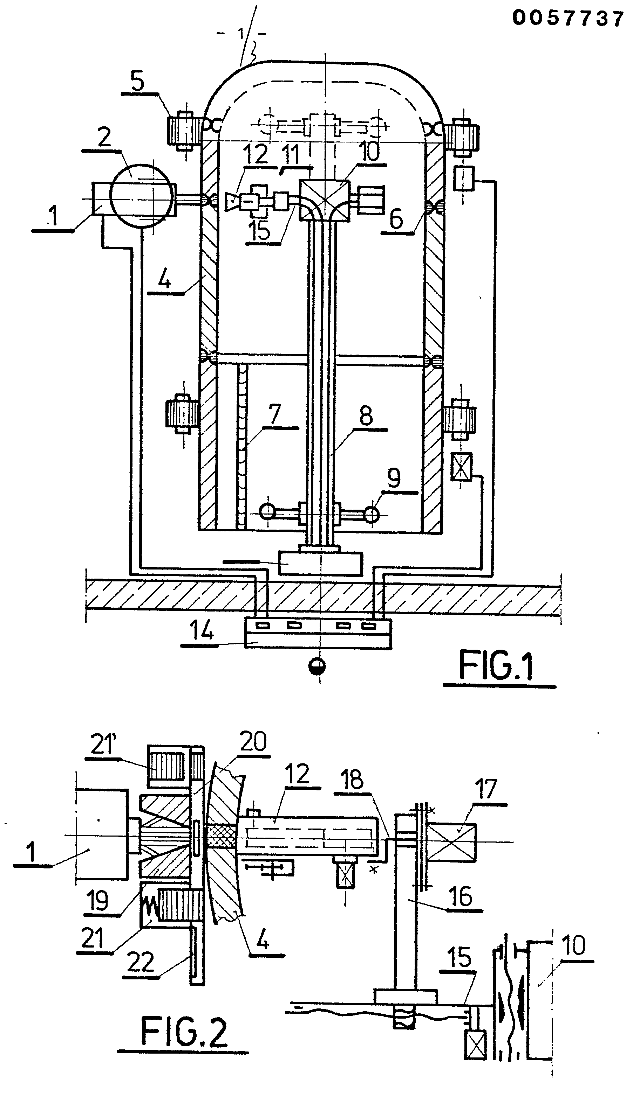

Fig. 1    eine allgemeine Draufsicht auf das Gerät zusammen mit den zusammenarbeitenden und Steuereinrichtungen,

Fig. 2    einen Übersichtsplan der Befestigung des Einlege- und Aufgabeapparates zusammen mit der Konstruktion des Bündelformgebers,

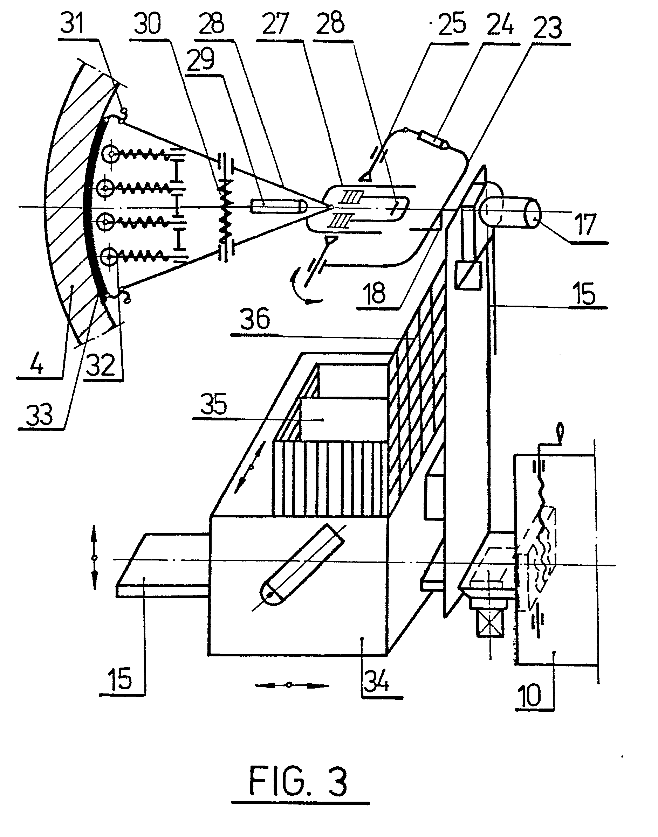

Fig. 3    einen Übersichtsplan der Wirkung des Einlegeapparates für einzelne Filme,

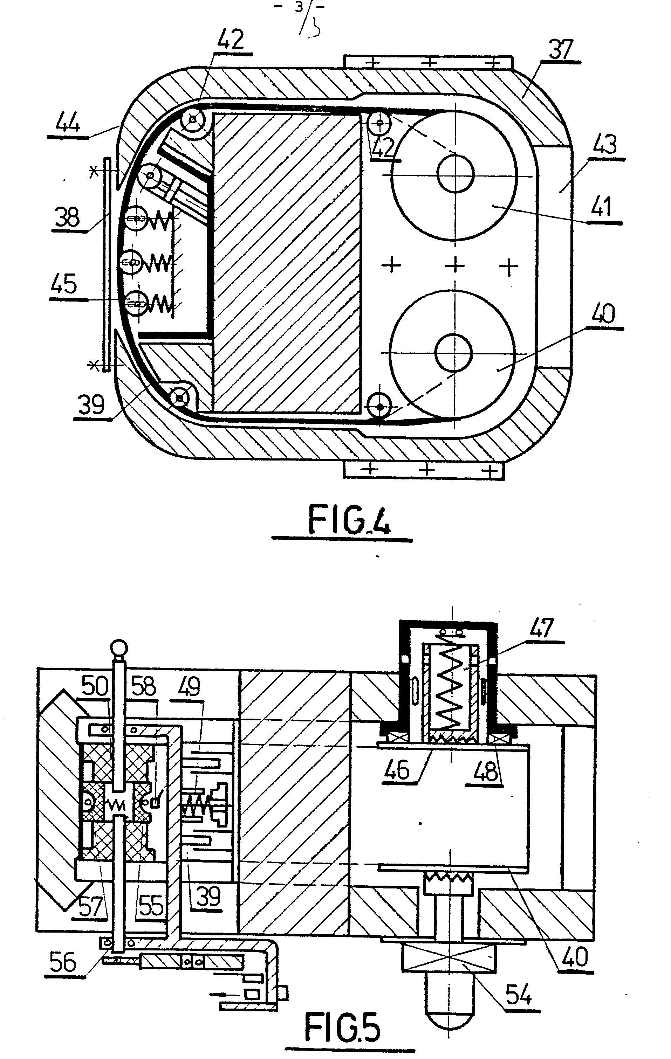

Fig. 4    einen Schnitt in Draufsicht des Aufgabeapparates des Bandfilmes, darstellend das Verschieben und Führen des Filmes, und

Fig. 5    einen Querschnitt desselben Apparates, darstellend das Wirkungsschema des Trommelantriebs und des Kontroll- und Steuerwerks.

In der bisherigen Praxis und auch beim Einsatz des erfindungsgemäßen Gerätes erfolgt die radiographische Fehlerprüfung von Abgüssen oder Schweißnähten von Schweißkonstruktionen in speziellen Räumen.

In dem Ausführungsbeispiel des erfindungsgemäßen Gerätes ist ein zu prüfender Gegenstand 4 in Form einer aus einer durch Umfangsnähte 6 und Längsnähte 7 verbundenen Schweißkonstruktion ausgeführten Trommel dargestellt, wobei dieser Gegenstand auf Antriebsrollen 3 und auf nichtantreibenden Rollen 5 aufgestellt ist. An der Außenseite des zu prüfenden Gegenstandes 4 ist ein radiographisches Fehlerprüfgerät 1 des Typs Linearbeschleuniger gestellt, der mittels einer Handhabeeinrichtung 2 festgestellt wird. Die Steuerung der Handhabeeinrichtung 2 ist in der Steuerstation 14 enthalten, die sich außerhalb der Strahlungszone befindet. Zwecks der radiographischen Prüfung beispielsweise der Schweißnaht 6 werden an die gegenüberliegende Seite der Schweißnaht gegenüber der Strahlungsquelle entweder einzelne Filme mittels des Einlegeapparates 11 mit Gegenhaltern oder ein Bandfilm mittels des Aufgabeapparates 12 angestellt.

Die Filme werden für die Belichtungszeit selbsttätig zyklisch geliefert. Die Aufgabe der Filme in die Expositionsstelle ist an die Ausführung von Aufnahmen auf einzelnen oder auf Bandfilmen in einer Längsanordnung, wie z.B. zur Belichtung der Schweißnaht 7, des Gegenstandes 4 und in Umfangsanordnung der Schweißnaht 6, angepaßt. Die Arbeitsgänge des Einlegens der einzelnen Filme und dann deren Zuhalten für die Expositionszeit, oder der Verschiebung des Bandfilmes sind von der Leistung des belichteten Apparates und von der Stärke des zu prüfenden Gegenstandes abhängig, und deshalb ist deren Verlauf mit der Einwirkung des radiographischen Fehlerprüfgerätes, der Einrichtungen 2 und 3 synchronisiert, deren technische Lösungen zwecks der Erreichung synchronisierter Arbeitsgänge auf einem bekannten Wege realisiert werden - elektrisch, mechanischelektrisch oder elektrisch-elektronisch.

Das erfindungsgemäße Gerät besitzt in dem Ausführungsbeispiel eine mit energetischen Faktoren versehene Versorgungsstation 13, die mit Hilfe der Steuerstation 14 kontrolliert und gesteuert wird. Von der Versorgungsstation 13 ist längs dem zu prüfenden Gegenstand 4 eine entsprechende lange Führung 8 eingebaut, die aus lösbaren Elementen zusammengesetzt ist und auf zwei Kugelstützen 9 abgestützt ist und einerseits die mit energetischen Faktoren versorgende Sammelleitung und andererseits die Vorschubbahn des Werkes 10 bildet. Unabhängig davon kann die Führung 8 durch eine an der Station 13 befestigte Auslegerkonstruktion ersetzt werden, zwecks der Einführung des Werkes 10 in das mannlochähnliche Loch oder zum Befestigen des Werkes 10 in stationärer Weise zum Prüfen der Gegenstände mit rechteckförmiger Gestalt, die verschiebbar gegenüber dem radiographischen Fehlerprüfgerät 1 angeordnet sind. Die technische Lösung des durchfahrbaren Werkes 10 ist auf bekannte Weise ausgeführt.

Das Werk 10 besitzt einen senkrecht verschiebbaren Ausleger 15 mit einer Säule 16, die mit einem durch den Antrieb 17 betriebenen Drehhebel 18 versehen ist, in welchen je nach dem Radiogramm-Typ entweder der Einlegeapparat 11 für einzelne Filme oder der Aufgabeapparat 12 zum Vorschub des Bandfilmes eingebaut wird, wobei die Apparate 11 und 12 in der Richtung des zu prüfenden Gegenstandes 4 längs dem Ausleger 15 verschoben werden können.

Das erfindungsgemäße Gerät ist zusätzlich mit einem zwischen dem beleuchtenden radiographischen Fehlerprüfgerät 1 und dem zu prüfenden Gegenstand 4 angeordnet, ein enges Bündel der emittierten Strahlen formenden Bündelformgeber 19 versehen. Der Bündelformgeber 19 kann sich je nach der Art der zu prüfenden Längs- oder Umfangsnähte um die Stahlungsachse bis zu 90$^{\circ}$ drehen. Außerdem besteht dank dem Einsatz des Bündelformgebers 19 die Möglichkeit, die Überlichtungen im kontinuierlichen Verfahren mittels eines engen kollimierten Bündels durchzuführen, sowie auch eine Möglichkeit, die Strahlungsquelle an den zu prüfenden Gegenstand anzunähern, und somit auch die Möglichkeit, weniger zerstreute Hochqualitätsaufnahmen zu gewinnen. Der Bündelformgeber 19 ist aus Blei oder aus metallischem Uran ausgeführt und lösbar an das radiographische Fehlerprüfgerät 1 angebaut.

Das erfindungsgemäße Gerät ist zusätzlich mit einem Kassettenwerk 20 versehen, das je nach Bedarf zur Bezeichnung der ausgeführten Aufnahmen dient. Das Kassettenwerk 20 hat Magazine 21 und 21' für die mit Ziffern bezeichneten Rähmchen, die aus Blei ausgeführt sind und außerdem Buchstabenbezeichnungen und Gütemuster des Radiogrammes enthalten. Die Rähmchen werden zyklisch unmittelbar auf die Expositionsstelle aus dem Magazin, z.B. aus dem Magazin 21, aufgegeben und dann nach der Ausführung einer nächsten Aufnahme mittels eines in bekannter Weise ausgeführten Verschiebers 22 in das Magazin 21' eingeschoben.

Bei Bedarf der Ausführung einer Serie von radiographischen Aufnahmen auf einzelnen, typisch herzustellenden Filmen 33 z.B. mit den Abmessungen 100 x 480 mm wird auf dem Drehhebel 18 der Einlegeapparat 11 aufgebaut, dessen Rahmen 23 ein Kippwerk 24 zum Drehen in den Grenzen von 90° und eine Kurbelachse 25 zwecks des Speicherns der belichteten Filme und des Einlegens neuer Filme aufweist. An die Achse 25 ist das Aufgabewerk 26 samt dem Spannzeug angebaut, welches zum Lösen der selbstklemmenden Halter 31 des Filmes 33 und zum Abstellen oder Anstellen des Filmes gegenüber dem zu prüfenden Gegenstand 4 dient. Das Spannzeug 27 besitzt gelenkartig befestigte Rahmen 28 mit eingebautem Andrückwerk 29 und Federspannung 30 zum selbsttätigen Öffnen der Rahmen 28 und mit eingebautem Rollenspanner 32 zum Formen des Filmes 33 gegenüber der Fläche des zu prüfenden Gegenstandes.

Unabhängig davon ist der Einlegeapparat 11 mit einem an die Säule 16 angebauten Schutzkasten 34 versehen, der Magazine 35 der einzelnen Filme und den Deckel 36 hat. Der Schutzkasten 34 und der Deckel 36 sind aus einem Werkstoff mit großer Dichte, beispielsweise aus Blei oder metallischem Uran oder Wolfram und er dient zur Aufbewahrung von unbelichteten und belichteten Filmen in den Magazinen 35. Der Schutzkasten 34 ist mit einem Werk zur Aufgabe und Entnahme der einzelnen Filme und mit einem Werk zum Öffnen und Schließen des Deckels versehen, die in bekannter Weise ausgeführt sind und abhängig von der Wirkung des Einlegeapparates 11 betätigt werden.

Die Reihenfolge der Wirkung der Antriebe des Einlegeapparates 11 und der Expositionszeit erfolgt automatisch und ist in der Station 14 kontrolliert und gesteuert. Zur Ausführung einer Aufnahme-Serie in der Längsrichtung werden das Werk 10 und das radiographische Fehlerprüfgerät 1 mittels der Einrichtung 2 um einen gleichen Abstand verschoben.

Wenn die Aufnahmen auf einem Bandfilm 39 ausgeführt werden sollen, wird auf dem Drehhebel 18 der Aufgabeapparat 12 befestigt.

Der tragende Teil des Aufgabeapparates 12 ist ein Schutzgehäuse, bestehend aus oberen, unteren, mittleren und Umfangsschutzsegmenten, die auf Keilüberlappungen mittels Befestigungsschrauben verbunden und aus einem Stoff mit hoher Dichte ausgeführt werden. Die Konstruktion der Segmente und der Keilüberlappungen hat zum Zweck, den außerhalb des Bereichs der Strahlungsquelle befindlichen Bandfilm 39 gegen Belichtung zu schützen. Das Schutzgehäuse 37 hat im vorderen Teil ein durch einen Filtrierfilm 38 überdecktes Fenster, welcher Film bei der Formung des Bandes gegenüber der Oberfläche des zu prüfenden Gegenstandes 4 an das Band anliegt. Außerdem besitzen die Segmente des Schutzgehäuses 37, insbesondere die seitlichen und das mittlere, auf den gegenüber dem Fenster liegenden Flächen ausgelegte Masken, welche gegen die zerstreute Sekundärstrahlung schützen und aus metallischem Uran oder Wolfram ausgeführt sind. Das Umfangssegment des Gehäuses 37 weist ein Loch 43 auf, das den Einbau und Ausbau der Antriebs- und Abtriebstrommel 40 und 41 ermöglicht, die in das Schutzgehäuse 37 eingebaut sind. In dasselbe Gehäuse sind Leitrollen 42, nach dem Fenster einstellbare Andrückrollen 45 sowie das kontrollierende Steuerwerk 44 eingebaut.

Die Trommeln 40 und 41 sind mit Kupplungen 46 mit Stirnverzahnung versehen, die mittels eines Werkes mit regelbarer Andrückkraft angedrückt werden; außerdem sind in das Gehäuse dieser Werke elektromagnetische Bremsen 48 eingebaut, die unkontrollierte Verschiebungen des Bandfilmes 39 beseitigen, welche aus dem Trägheitsmoment der Drehteile resultieren. Die Antriebstrommel 40 ist mit einem Antrieb mit einem Mehrstufengetriebe versehen. Das Kontrollier- und Steuerwerk 44 drückt den Film 39 mittels eines federnden Werkes 49 über bereifte Rollen 50 an, welchen während des Bandvorschubes eine Drehbewegung zum Antrieb des Rades 51 gegeben wird. Auf diesem Rad ist ein in der Richtung der Drehachse einstellbarer fester Magnet 52 angebaut, wobei eine Umdrehung dieses Rades einer eingestellten Länge in der Vorschubrichtung des Bandes entspricht. Der Magnetschalter 53 der Tragkonstruktion des Werkes 49 ist einstellbar gegenüber dem festen Magnet 52 aufgebaut. Bei der Zusammenwirkung des Magnetfeldes des Magneten 52 mit dem Schalter 53 entsteht in bekannter Weise ein elektrischer Steuerimpuls, der zum Ausschalten des Antriebs 54 und zum Einschalten der Bremsen 48 zwecks des Anhaltens des Vorschubes des Films 39 ausgenutzt wird. Der entstandene elektrische Steuerimpuls wird nur beim Belichten in zyklischer Weise auf dem Bandfilm 39 ausgenutzt. Der Antrieb 54 kann ein Getriebe mit regelbarer Drehzahl der Ausgangswelle haben und mit einem elektrischen Schritt- oder Dosiermotor zum Antreiben des Getriebes versehen werden.

Unabhängig von der Steuerung der Zyklizität der Bewegung des Bandfilmes 39 ist auch das Beenden des Bandradiogramms 39 mittels eines zwischen den Rollen 50 auf der Achse 56 montierten Nachfolgewerkes 55 kontrolliert.

Das Werk 55 besitzt einen Kontaktring 57, der mit dem Steuerstrom gespeist wird, der durch den Schalter 58 abgenommen wird. Außerdem ist das Werk 55 derart konstruiert, daß es dank dem Einbau eines Federwerkes eine Verschiebungsmöglichkeit in der Richtung des Bandfilmes 39 hat. Nachdem das Band beendet ist, fällt das Werk 55 in die Nische hinein und löst den Kontakt 57 und gibt somit einen elektrischen Impuls zum Anhalten der Trommeln 40 und 41 ab und signalisiert damit in der Station 14. Die Reihenfolge und die Zyklizität der Wirkung der Antriebe zum Vorschub des Bandfilmes und der Antriebe des Aufgabeapparates 12 des Werkes 10 für Längsexpositionen, des Fehlerprüfgerätes 1 und der Einrichtung 2 erfolgt selbsttätig und wird in der Station 14 kontrolliert.

Das erfindungsgemäße Gerät ermöglicht die Durchführung der Prüfungen sowohl nach einem zyklischen als auch nach einem kontinuierlichen Verfahren, sowohl auf einzelnen Filmen 33 als auch auf einem Bandfilm 39. Bei den Prüfungen in dem zyklischen Verfahren wird der Bündelformgeber 19 abgenommen oder abgestellt; dann wird ein einzelner Film oder ein entsprechender Abschnitt des Bandfilmes für die festgestellte Zeitperiode vollkommen exponiert. Bei kontinuierlicher Exposition mittels eines engen Bündels wird der Gegenstand 4 geprüft und die einzelnen Filme 33 oder der Bandfilm 39 drehen sich mit gleicher eingestellter Geschwindigkeit bei einer Umfangsprüfung. Bei einer Längsprüfung verschieben sich hingehen die Strahlungsquelle 1 und das Werk 10 mit gleicher Geschwindigkeit im Falle des Bandfilmes. Im Falle der Belichtung einzelner Filme nach einem kontinuierlichen Verfahren übt das Werk 10 zyklische Bewegungen bei Längsexposition aus.

Beim Einsatz des Einlegeapparates 11 werden die Aufnahmen vorzugsweise nach einem zyklischen Verfahren ausgeführt.

Patentansprüche:

1. Gerät zur radiographischen Fehlerprüfung nach einem kontinuierlichen oder zyklischen Verfahren zur Prüfung von Schweißnähten, Werkstoffen, Bauteilen und Abgüssen nach radiographischen Methoden, und insbesondere mittels Apparaten mit großen Expositionsdosen und Strahlungsenergie, dadurch gekennzeichnet, daß auf einer aus auf Kugelstützen (9) abgestützten lösbaren Elementen verschiedener Länge zusammengesetzten Führung (8) ein mit einem in senkrechter Richtung einstellbarer Ausleger (15), zum Einbau in Richtung des zu prüfenden Gegenstandes (4) verschiebbar, eines Einlegeapparates (11) für einzelne Filme oder eines Aufgabeapparates (12) zur zyklischen oder kontinuierlichen Belichtung versehenes durchfahrbares Werk (10) aufgebaut ist, wobei kontinuierliche Belichtung durch einen Bündelformgeber (19) realisiert wird, und die Wirkung der Antriebe des Gerätes während der Exposition mittels einer Versorgungs- und Steuerstation (13 und 14) mit dem radiographischen Fehlerprüfgerät (1), einer Handhabungseinrichtung (2), dem zu prüfenden Gegenstand (4) und diesen Gegenstand (4) antreibenden Rollen (3) synchronisiert ist.

2. Gerät nach Anspruch 1, dadurch gekennzeichnet, daß an den Ausleger (15) eine mit einem angetriebenen, die Apparate (11 oder 12) befestigenden Drehhebel (18) versehene Säule (16) verschiebbar angebaut ist.

3. Gerät nach Anspruch 1 oder 2, dadurch gekennzeichnet, daß der Bündelformgeber (19) einen engen, formgebenden kollimierten Spalt für Expositionsstrahlen mit entsprechendem Format aufweist und zwischen dem radiographischen Fehlerprüfgerät (1) und dem zu prüfenden Gegen-

stand (4) mit einer Drehmöglichkeit um bis zu 90° gegenüber der Strahlungsbündelachse angeordnet ist.

4. Gerät nach einem der Ansprüche 1 bis 3, dadurch gekennzeichnet, daß es als Zusatzausrüstung ein bei Bedarf an die Handhabungseinrichtung (2) angebautes Kassettenwerk (20) mit Magazinen (21 und 21') und einem Verschieber (22) aufweist, welches zyklisch nach Bedarf Rähmchen mit Ziffern-, Buchstabenbezeichnungen und einem Gütemuster des Radiogrammes aufgibt, wobei diese Rähmchen unmittelbar auf die zu prüfende Stelle aufgelegt werden und das Kassettenwerk (20) mit einer Drehmöglichkeit bei Bedarf bis zu 90° gegenüber der Strahlungsbündelachse ausgeführt ist.

5. Gerät nach einem der Ansprüche 1 bis 3, dadurch gekennzeichnet, daß der lösbar auf dem Drehhebel (18) aufgebaute Einlegeapparat (11) einen Rahmen (23), ein Kippwerk (24), eine Kurbelachse (25) mit eingebautem Aufgabewerk (26) und mit dem Spannzeug (27) aufweist und ausserdem an das Aufgabewerk (26) gelenkartig Rähmchen (28) angebaut sind, welche ein Andrückwerk (29) und Feder- und Rollenspanner (30 und 32) enthalten.

6. Gerät nach einem der Ansprüche 1 bis 3, dadurch gekennzeichnet, daß der lösbar auf den Drehhebel (18) aufgebaute Aufgabeapparat (12) für den Bandfilm ein Schutzgehäuse (37), eine nichtantreibende Trommel (40), eine Antriebstrommel (41), Führungs- und Andrückrollen (42 und 45) und ein Kontroll- und Steuerwerk (44) aufweist, wobei im hinteren Teil des Gehäuses (37) ein Loch (43) ausgeführt ist, welches das Aufsetzen und Abnehmen der Trommeln (40 und 41) ermöglicht, welche Überlastungskupplungen (46) mit Stirnverzahnung besitzen, die mittels eines Druckwerkes (47) lösbar und einschaltbar sind, und elektromagnetische Bremsen (48), die in das

- 16 -

Gehäuse des Werkes (47) eingebaut sind.

7. Gerät nach Anspruch 6, dadurch gekennzeichnet, daß das Schutzgehäuse (37) einen Filtrierfilm (38) aufweist, der an den Bandfilm auf der Seite des Bündels anliegt und die mittleren und seitlichen Segmente des Gehäuses (37) mit Masken verlegt sind, die aus metallischem Uran oder Wolfram ausgeführt sind und gegen die zerstreute Sekundärstrahlung schützen.

8. Gerät nach Anspruch 6 und 7, dadurch gekennzeichnet, daß das Kontroll- und Steuerwerk (44) ein federndes Werk (49) mit regelbarer Druckkraft, sich mittels des Bandfilmes (39) drehende Rollen (50) und ein angetriebenes Rad (51) mit einem daran in Richtung der Drehachse einstellbar befestigten Dauermagneten (52) aufweist, welcher bei zyklischer Belichtung einen magnetischen Impuls zu einem elektromagnetischen Schalter (53) zwecks Anhaltens der Trommeln (40 und 41) durch die Bremse (48) abgibt, und außerdem das Werk (44) ein auf der Achse (56) sitzendes Nachfolgewerk (55) für die Signalisation und Steuerung des Endes des Bandfilmes (39) aufweist.

0057737

FIG.1

FIG.2

FIG. 3

FIG.4

FIG.5